Europäisches Patentamt

European Patent Office

Office européen des brevets

(19)

(11) Publication number: **0 121 617**
**A1**

(12) **EUROPEAN PATENT APPLICATION**

(21) Application number: **83301964.9**

(22) Date of filing: **07.04.83**

(51) Int. Cl.³: **G 01 B 11/02, F 27 D 1/16**

(43) Date of publication of application: **17.10.84**
**Bulletin 84/42**

(84) Designated Contracting States: **AT BE DE FR GB IT LU NL SE**

(71) Applicant: **Armco Inc., 703 Curtis Street, Middletown Ohio 45043 (US)**

(72) Inventor: **Neiheisel, Gary Louis, 5478 Werk Road, Cincinnati Ohio (US)**

(74) Representative: **Grundy, Derek George Ritchie et al, CARPMAELS & RANSFORD 43, Bloomsbury Square, London WC1A 2RA (GB)**

(54) Method and apparatus for measuring wear in the lining of refractory furnaces.

(57) A continuous wave laser light beam (8) is directed at the refractory lining (6) within a furnace vessel (4), and the displacement as measured by a self-scanned linear array (14) of the reflected light beam from a nominal or reference position measured to provide an indication of lining wear or damage. The laster transmitter (7) and array (14) are scanned in fixed relationship to each other over the entire lining surface (6). Position and wear information are correlated by a computer so that refractory material may be applied to the worn or damaged areas by a gunning spray nozzle (37) to affect repair of the lining surface (6). The method and apparatus may be used shortly following each heat without the need to cool the furnace vessel.

EP 0 121 617 A1

ACTORUM AG

## METHOD AND APPARATUS FOR MEASURING
## WEAR IN THE LINING OF REFRACTORY FURNACES

The present invention is directed to measurement of wear occurring in steel furnace refractory linings, and more particularly to measurement using a laser transmitter and linear scanned array receiver.

The interior wall of BOF steel furnaces is often provided with a refractory lining to prevent the molten steel contents of the vessel from coming in contact with the outer supporting structure of the vessel. Over a period of time, portions of the refractory lining may become worn or damaged, reducing the thickness of the protective lining. Once such wear has been detected, it must be repaired with refractory material sprayed onto the lining by a conventional gunning device to prevent lining breakthrough.

Several methods have been suggested for inspecting and measuring worn or damaged areas in the interior lining of the BOF vessel. The simplest involves a visual inspection by the workman inside the vessel itself. However, this necessitates a considerable amount of time since the vessel must be allowed to cool before the inspection can take place. In addition, a considerable amount of energy must be expended to again raise the temperature of the vessel to the appropriate steel processing temperature. During this timne, the vessel is out of service thereby slowing production and increasing the cost of the finished steel product.

In addition to the manual inspection method just described, various types of automated methods have also been explored. For example, in U.S.A. Patent No.4,107,244 issued August 15, 1978 to Ochiai et al, wear of the vessel lining is measured by detecting the phase difference of modulated microwaves reflected from a reference surface of the refractory lining and the damaged surface. This information may then be used to control the refractory gunning nozzle to affect the lining repair.

In U.S.A. Patent No. 4,218,989, issued August 26, 1980 to Fujita et al, the inspection device is a conventional TV camera which provides an operator with a visual display of the lining condition. The operator may then manually take the appropriate steps to direct the gunning nozzle to effect the lining repair.

In U.S.A. Patent No. 4,227,802, issued October 14, 1980 to Scholdstrom et al, a modulated laser is used to sense the distance from a point outside the vessel to the inner wall of the vessel. Variations in this distance correspond to variations in the lining thickness. Phase information resulting from the reflected laser beam may then be correlated by means of a computer with the actual lining thickness.

U.S.A. Patent No. 4,248,809 issued February 3, 1981, coaxial lines or wires are embedded in the furnace wall and are supplied with an electrical signal. Variation of the length of these lines as measured by the variation in the applied electrical signal may be correlated with the remaining thickness of the refractory material.

In U.S.A. Patent No. 4,301,998 issued November 24, 1981 to Rodway describes apparatus for remotely controlling the gunning nozzle by means of a television camera mounted adjacent the nozzle.

Published West German patent specification OS 2945251 discloses apparatus for determining the level of a molten surface in a vessel, such as a continuous casting machine. A laser is directed at the surface with reflected radiation being received by a photoelectric receiver. The output is sent to a scanning and evaluation circuit. Both the transmitter and receiver are fixed in place with no scanning.

The present invention is directed to apparatus for measuring the relative thickness of the refractory lining to provide a visual display of those areas of the lining wall which are worn and may require repair. The measuring assembly may be used to measure the condition of the refractory lining following each heat without the need to allow the vessel to cool.

According to the invention there is provided apparatus for measuring wear of the refractory lining of the interior wall of a generally vertically oriented furnace vessel of the type having a top opening, characterized by:

a. inspection means including:

a laser transmitter for directing a collimated substantially monochromatic light beam toward the interior furnace wall;

a self-scanned linear array receiver positioned to detect a light beam reflected from the furnace wall, said array comprising a plurality of optical elements positioned in side-by-side relationship, each of said elements producing an electrical signal in response to the reflected light beam;

b. means for positioning said inspection means within the furnace vessel including:

means for indexing said inspection means to a plurality of vertical positions within the vessel; and

means for rotating said inspection means in a substantially horizontal plane about a vertical axis;

c. means for correlating an electrical signal received from a particular linear array element with the relative lining thickness at a particular point on the furnace wall lining; and

d. means for displaying the measured relative lining thickness.

A band pass optical filter passing substantially only the wavelength of the reflected light beam is preferably provided and positioned in front of the linear array. This filter eliminates other radiation such as that associated with the adjacent hot lining surface. A lens is also preferably positioned between the filter and the linear array to focus the reflected light beam on the array.

0121617

4

The measuring apparatus is provided with means for lowering the inspection means through the top opening into the furnace vessel. The entire structure may be supported from a beam extending across the top of the furnace. Means for rotating the inspection means in a substantially horizontal plane about a vertical axis permits the entire inner circumference of the lining to be scanned and inspected at a particular vertical position within the vessel. Means for indexing the inspection means to a plurality of vertical positions within the vessel permits the entire vessel lining to be inspected.

The inspection means may be water cooled so that it may be operated within the hot vessel environment.

The invention further provides a method for inspecting the interior refractory lining of a furnace vessel having a top opening characterized by repeating at a plurality of spaced locations around the inner circumference of the furnace vessel at a fixed depth within the vessel the steps of:

directing a collimated substantially monochromatic laser light beam toward the refractory lining from a position within the furnace vessel;

detecting the displacement of the light beam reflected from the lining surface from the position of the light beam reflected from the nominal wall surface; and

correlating said displacement with the relative thickness of the lining; and

repeating the foregoing steps at a plurality of vertical positions within the vessel such that substantially all of the lining wall of the vessel are scanned.

Further features of the invention will become apparent from the detailed description which follows.

Fig. 1 is a top plan view schematically illustrating the measuring apparatus of the present invention positioned within the furnace vessel.

Fig. 2 is a fragmentary side elevation schematic view of Fig. 1.

Fig. 3 is a fragmentary side elevation view of the measuring apparatus of the present invention within the furnace vessel and associated supporting structure.

Fig. 4 is a fragmentary front elevation view of the measuring apparatus and supporting structure of Fig. 3 with the inspection means retracted from within the furnace vessel.

Fig. 5 is a block diagram of the signal processing of the present invention.

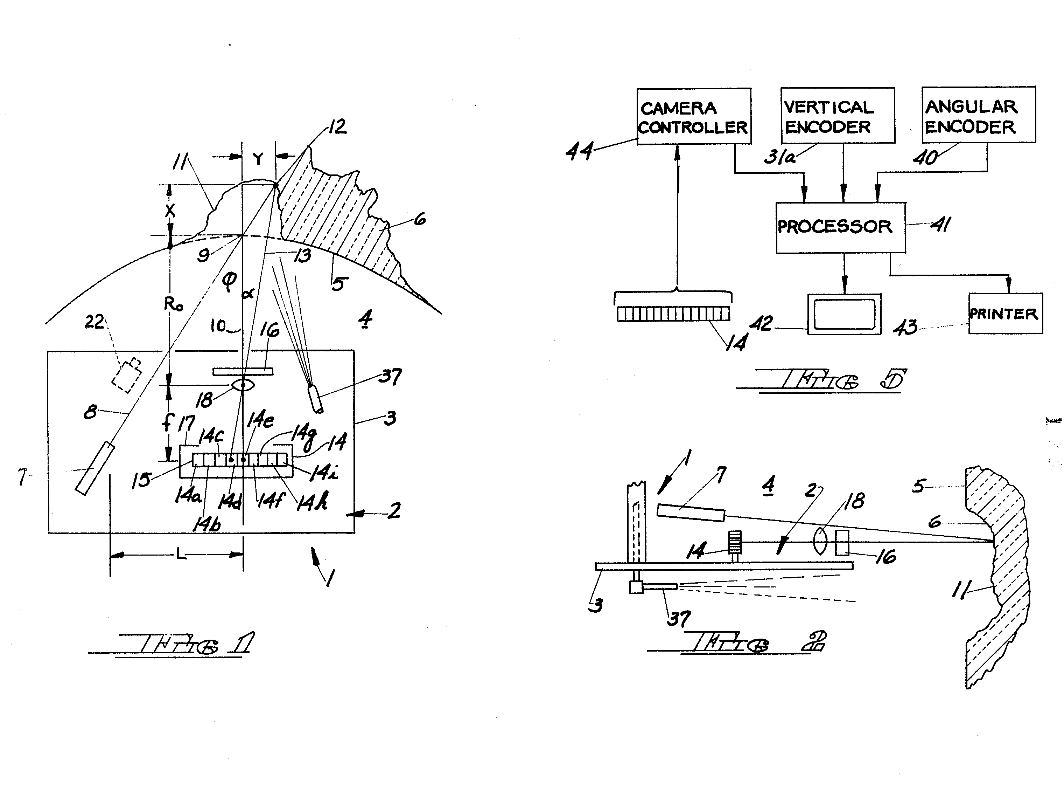

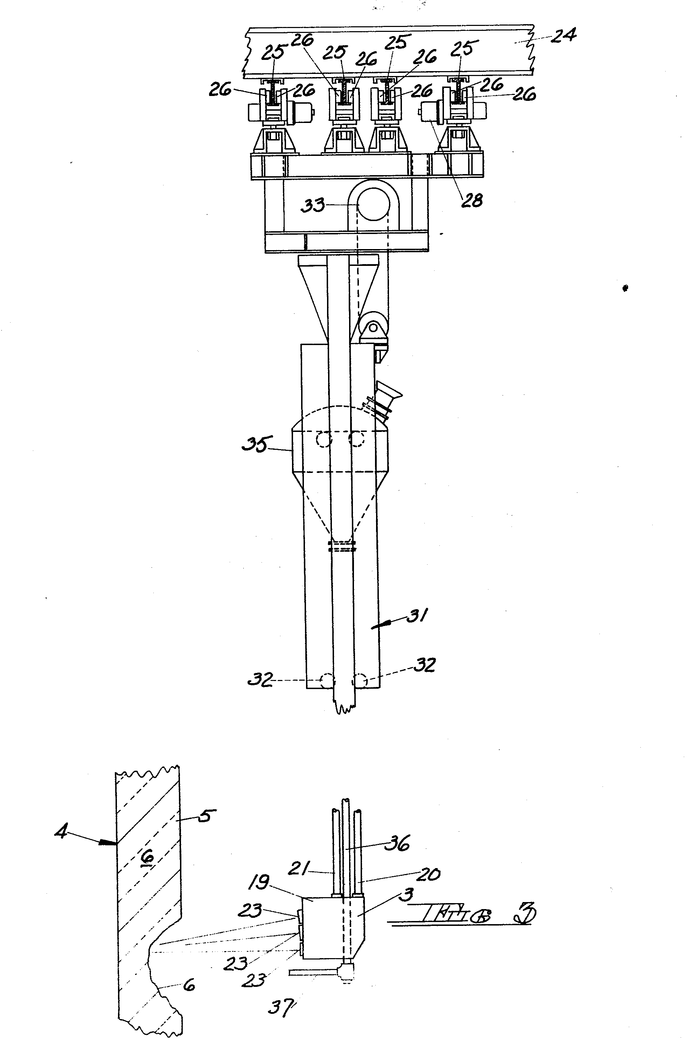

The primary components of the measuring system of the present invention are illustrated schematically in Fig. 1. The measuring apparatus, shown generally at 1, includes inspection means 2 which is mounted on a generally flat horizontally oriented rectangular-shaped mounting plate 3. As can best be seen in Fig. 1 and Fig. 2, mounting plate 3 may be positioned within the furnace vessel 4 in spaced relationship with the inner surface 5 of the furnace vessel lining 6. As is well known in the art, lining 6 is constructed from a heat resistant refractory material.

Inspection means 2 includes a narrow band continuous wave laser transmitter 7 which directs a collimated substantially monochromatic light beam illustrated schematically at 8 toward the inner wall surface 5 of the furnace vessel. Where the lining 6 is essentially undamaged, the incident light beam 8 will strike the inner surface at a point 9 and be reflected along nominal reflectance path 10. However, in the event that the lining contains a worn or damaged area 11, the incident light beam 8 will strike the damaged area at a point 12 and be reflected along a different path 13. It will be understood that laser transmitter 7 may of any conventional type such as HeNe, Argon, HeCd, etc. In addition, laser units producing light beams of different wavelengths may be used in different types of furnaces, depending upon the relative wall temperatures involved.

As can also be seen in Fig. 2, for example, laser transmitter 7 can be positioned slightly above the plane of mounting plate 3 by any convenient means, not shown.

Inspection means 2 also is provided with a self-scanned linear array receiver 14. Receiver 14 is positioned so as to detect the light beam reflected from the furnace wall. In the embodiment illustrated, self-scanned linear array 14 comprises a plurality of optical elements, 14a-14i, for example, lying along a linear axis 15. Each of the optical elements produces an electrical signal output in response to the reflected light beam falling on that element. It will be observed that the geometrical relationship of receiver 14 and transmitter 7 is important in the present invention. As is best shown in Fig. 1, linear axis 15 of the array is positioned substantially perpendicularly to the normal or nominal path of reflectance 10, so that the normal or nominal reflected light beam reflected from the undamaged wall 5 strikes array element 14e. In other words, the array elements lie along substantially linear axis which is in the same plane as the laser transmitter axis. In situations where the furnace wall is further away from receiver 15, as where the lining is damaged or worn, the reflected light beam, exemplified by path 13, will be such as to strike one of the other optical array elements, such as element 14d. It will be further understood that in the event there is a built-up area on the furnace lining, the reflected light beam will also be displaced to a different array element, albeit in the opposite direction. In all events, it will be observed that the angle φ between incident path 8 and normal reflectance path 10 remains constant.

A band pass optical filter 16 is positioned in the path of the reflected light beam in front of linear array 15. Filter 16 is designed to pass substantially only the wavelengths associated with the reflected light beam, and to reject other incident radiation, such as that which might be emitted from the hot inner surface 5 of the furnace vessel, which may be in the neighborhood of 1800-3000°F. Optical filter 16 may be supported on mounting plate 3 by any convenient means, not shown. In addition, the front portion of linear array 15 may be shielded as indicated by housing 17 to restrict the amount of ambient radiation reaching the optical elements 14.

A lens 18 is also positioned in the path of the reflected light beam in front of linear array 15 for focusing the reflected light beam on the array elements. Lens 18 may be mounted on mounting plate 3 by any convenient means, not shown. It will be understood that the angle between the incident light beam from laser 7 and the axis of lens 18 is constant.

As can best be seen from the schematic illustration in Fig. 1, the presence of a worn or damaged area of depth X will cause the point of reflectance of the incident light beam to shift from point 9 located a distance $R_O$ from the central vertical axis of lens 18 to a point of reflectance 12 displaced an additional distance X from the central vertical axis of lens 18 and a distance Y displaced transversely of reflectance path 10. At the same time, a reflected beam impinging on the linear array 15 shifts from nominal center element 14e to another optical element such as element 14d. This produces a corresponding translation in the reflectance path measured by angle α. The focal length of lens 18 is designated as f. A parameter $M_O$ is identified as the particular optical element, such as element 14e, associated with reflectance path 10 (distance $R_O$). Likewise, a parameter $M_1$ is identified as the optical element, for example element 14d, associated with the reflectance path 13. The distance between these two optical elements, i.e. $M_1-M_O$ is identified as a parameter $\Delta y$. Finally, the distance between reflectance path 10 and the point at which the incident beam 8 emerges from laser 7, i.e. the distance from optical element 14e to the point where the plane of the array intersects the axis of the laser beam, is identified as L.

It can be shown by trigonometric manipulation that:

$$X = R_O \left[ \frac{L}{\Delta y} \left( \frac{f}{R_O + f} \right) - 1 \right]^{-1}$$

Since L is fixed and the focal distance f is known, the only variable is $M_1$, the optical element 14 receiving reflected energy from the worn or damaged area.

Consequently, by merely counting the displacement of the reflected light beam on the linear array, the amount of wall wear (or build-up in the case of a translation of the reflected beam in the opposite direction) can be directly obtained.

It will be observed that laser transmitter 7 is positioned slightly above the plane of receiver 14. Furthermore, in the preferred embodiment illustrated, the axis of the laser transmitter must lie in the plane containing the long axis of the array, 15.

If desired, a conventional television camera 22 may also be associated with mounting plate 3 so as to view the area of the wall under consideration.

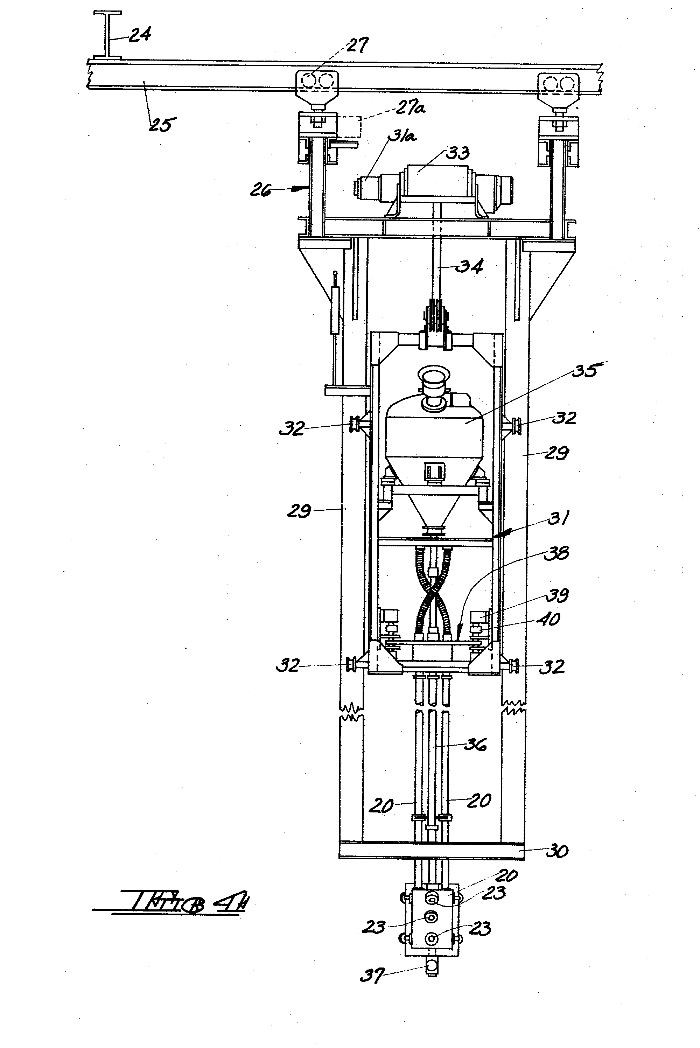

As best shown in Fig. 4, the front face of enclosure 19 is provided with three windows 23 arranged along a vertical axis. In the preferred embodiment illustrated, the incident light beam is directed through the upper window from laser transmitter 7. The lowermost window 23 is positioned in front of linear array 14 and receives the reflective light beam. The conventional television camera 22 views the area under consideration through the central window. It will be understood that these windows will be constructed of a heat resistant material, and in the case of the windows associated with the laser transmitter and linear array, may be formed from a material transmissive only to the laser wavelength to provide optical filtering.

It is also desirable to be able to scan the inspection apparatus over the interior surface of the furnace vessel 4 so that the entire lining may be inspected. This may be accomplished as shown schematically in Fig. 3 and Fig. 4. Fundamentally, inspection means 2 is mounted within a box-like enclosure 19 which completely surrounds the inspection means to protect the various components from the hostile environment within the furnace vessel structure. The enclosure may be cooled by means of a cooling fluid, such as water, circulated through the walls of the enclosure by means of flexible supply and exhaust conduits 20 and 21, respectively. Fluid may be supplied to conduits 20 and 21 from a source of fluid supply, not shown.

Inspection means 2 and its enclosure 19 are supported within the furnace vessel by means of the structure illustrated in Fig. 3 and Fig. 4. In Fig. 3, the inspection means is illustrated in a lowered position, while in Fig. 4 the inspection means is illustrated in a fully retracted position, where the inspection means would be positioned above the top opening of the furnace vessel.

A horizontally disposed supporting beam 24 extends across the top of the furnace opening, and is spaced some distance thereabove. Beam 24 supports a plurality of transversely extending horizontally disposed spaced I-shaped beams or tracks 25 having a downwardly depending web portion terminating at its lower end in outwardly directed flanges. Tracks 25 support a crane structure, shown generally at 26, which is supported on the track flanges by rotatably mounted wheels, one of which is shown at 27, so that the entire crane structure may be moved horizontally back and forth by means of electric drive motors 28. A position controller 27a, such as a limit switch, for example, shown schematically in Fig. 4, may be used to stop the horizontal movement of the inspection means at the axis of the vessel.

The lower portion of crane structure 27 is defined by a pair of spaced parallel vertically depending side rails 29 joined at their lower ends by a transversely extending end frame member 30.

The vertically movable carriage shown generally at 31 is free to move along end frame members 30 upon rotatably mounted wheels 32. The entire carriage may be raised or lowered by means of an electrically operated winch 33 connected to the upper end of carriage 31 by a cable 34. The vertical position of the carriage and hence the inspection means may be sensed by a position transducer 31a.

Carriage 31 mounts a hopper 35 which contains a supply of the refractory lining material for repairing the furnace wall lining. The lower end of the hopper terminates in a conduit 36, the lower end of which is formed in a horizontally directed spray nozzle 37 positioned beneath inspection means enclosure 19. Consequently, the fluid refractory material may be conveyed under pressure from hopper 35 through conduit 36 to spray nozzle 37 to repair the worn or damaged area as is well known in the art.

Means are also provided for rotating the inspection means 2 in a substantially horizontal plane about a vertical axis, which in the preferred embodiment is the central axis of the vessel. This is provided by a rotary table shown generally at 38 located at the lower end of carriage 31. Rotary table 38, as well as water supply conduit 20, water exhaust conduit 21, and refractory material supply conduit 36, which are connected to it, may be rotated approximately 360° by means of a motorized drive assembly 39. Drive assembly 39 may be provided with a rotary encoder, shown schematically at 40 in Fig. 4, for example, so that the actual angular position of the inspection means 2 and spray nozzle 37 may be accurately determined.

To summarize, inspection means 2 and spray nozzle 37 may be translated in a horizontal direction by the crane structure 27, and in the vertical direction by the vertical movement of carriage 31. Likewise, rotational movement may be imparted to inspection means 2 in order to scan the entire interior of the furnace vessel by means of rotary table 38 and its associated electromechanical driving structure 39.

In operation, the inspection means is positioned over the top opening of the furnace vessel by moving crane structure 27, with the horizontal position being sensed by horizontal encoder 27a. Inspection means 2 may then be lowered into the vessel to a particular height immediately below the vessel opening by means of carriage 31, with the vertical position being measured by vertical encoder 31a. The inspection means may then be rotated by means of rotary table 38 with the radial position being measured by rotary encoder 40. For example, a measurement may be taken at a plurality of positions around the inner circumference of the furnace wall.

At each measurement point, the laser radiation reflected from the wall lining will impinge on a particular optical element 14, in order to provide an indication of the thickness of the lining as noted hereinabove. As shown in the block diagram of Fig. 5, the information resulting from the linear scanned array 14, as well as the position information from the position encoders, is directed to a signal processor 41, such as a digital computer. A camera controller, 44, transforms the displacement of the focused laser spot on the array into an analog voltage proportional to wall wear or build-up. The resulting data may then be displayed on a visual display 42 or given as hard copy from a printer 43 in order to provide a display of the actual profile of the wall surface at a particular height. After each radial scan has been completed, the inspection means may be lowered a predetermined amount, and the scanning process repeated.

At each inspection point, the gunning nozzle may also be operated to repair the worn or damaged area. Verification that the repair has been affected may be made through the conventional TV camera 22 and a television monitor which may be display 42. Alternately, the information relating to the relative aligning thickness may be stored in processor 41 and displayed at a later time in order to enable the operator to direct the gunnite nozzle to spray refractory material at the appropriate location on the lining surface.

It will be understood that the above measurement sequence may be performed after every heat or after a predetermined number of heats. In addition, one of the measurement structures may be provided for each BOF, or for a plurality of BOF vessels. The two axis scanning permits the profile of the lining to be ascertained with a high degree of accuracy and reliability.

It will be understood that various changes in the details, materials, steps and arrangements of parts, which have been herein described and illustrated in order to explain the nature of the invention, may be made by those skilled in the art within the principle and scope of the invention as expressed in the appended claims.

Claims:

1. Apparatus for measuring wear of the refractory lining of the interior wall of a generally vertically oriented furnace vessel of the type having a top opening, characterized by:

a. inspection means including:

a laser transmitter for directing a collimated substantially monochromatic light beam toward the interior furnace wall;

a self-scanned linear array receiver positioned to detect a light beam reflected from the furnace wall, said array comprising a plurality of optical elements positioned in side-by-side relationship, each of said elemnents producing an electrical signal in response to the reflected light beam;

b. means for positioning said inspection means within the furnace vessel including:

means for indexing said inspection means to a plurality of vertical positions within the vessel; and

means for rotating said inspection means in a substantially horizontal plane about a vertical axis;

c. means for correlating an electrical signal received from a particular linear array element with the relative lining thickness at a particular point on the furnace wall lining; and

d. means for displaying the measured relative lining thickness.

2. The apparatus according to claim 1 wherein said transmitter produces a continuous wave output.

3. The apparatus according to claim 2 including a band pass optical filter positioned in the path of and passing substantially only the reflected light beam.

4. The apparatus according to claim 3 including a lens positioned in the path of the reflected light beam for focusing the reflected light beam on the linear array.

5. The apparatus according to claim 4 wherein said transmitter and receiver are positioned with respect to each other such that the angle between the incident light beam emitted by the transmitter and the axis of the focusing lens is constant.

6. The apparatus according to claim 5 wherein said optical elements lie along a substantially linear axis which is in the same plane as the laser transmitter axis.

7. The apparatus according to claim 6 including a television camera and display means for monitoring the area of the vessel lining illuminated by the light beam.

8. The apparatus according to claim 6 wherein said vertical axis of rotation passes through the central vertical axis of the vessel.

9. The apparatus according to claim 8 wherein said transmitter is vertically spaced with respect to said linear array.

10. The apparatus according to claim 8 wherein the reflected light beam from the nominal lining surface impinges on a first optical element and the reflected light beam from a worn or damaged lining surface impinges on a second optical element, including means for counting the number of elements by which said second optical element is displaced from said first optical element.

11. The apparatus according to claim 10 including a gunning spray nozzle associated with said inspection means for directing fluid refractory material at the lining area inspected by the inspection means to affect the repair of a detected worn or damaged area.

12. The apparatus according to claim 11 including means for cooling said inspection means.

13. A method for inspecting the interior refractory lining of a furnace vessel having a top opening characterized by repeating at a plurality of spaced locations around the inner circumference of the furnace vessel at a fixed depth within the vessel the steps of:

directing a collimated substantially monochromatic laser light beam toward the refractory lining from a position within the furnace vessel;

detecting the displacement of the light beam reflected from the lining surface from the position of the light beam reflected from the nominal wall surface; and

correlating said displacement with the relative thickness of the lining; and

repeating the foregoing steps at a plurality of vertical positions within the vessel such that substantially all of the lining wall of the vessel are scanned.

14. The method according to claim 13 wherein said displacement is measured in incremental distances from the position of the light beam reflected from the nominal wall surface.

15. The method according to claim 14 including the step of spraying the refractory material on the vessel wall to repair worn or damaged areas following said inspection steps.

FIG. 1

FIG. 2a

FIG. 3

0121617

FIG. 3

0121617

FIG 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,X<br>Y | FR-A-2 314 531 (NIPPON STEEL CORP.)<br>* Figures 2,5,6,7,3,4; introduction; page 5, line 27 - page 7, line 27; page 8, lines 1-13; page 8, line 19 - page 10, line 22 * | 1,2,8,<br>11-15 | G 01 B 11/02<br>F 27 D 1/16 |
| | --- | | |
| Y,X | DE-A-2 945 251 (BETRIEBSFORSCHUNGSINSTITUT VDEh - INSTITUT FÜR ANGEWANDTE FORSCHUNG GmbH)<br>* Introduction; figure; page 9, paragraph 4 - page 10, paragraph 2 * | 1-6,10<br>,13,14 | |
| | --- | | |
| Y | US-A-4 331 975 (W.G. KRAWZA et al.)<br>* Figures 1-3; column 2, line 19 - column 3, line 52; column 4, lines 4-27 * | 1,2,4-<br>10,13<br>14 | TECHNICAL FIELDS SEARCHED (Int. Cl. ³) |
| | --- | | G 01 B 11/00<br>F 27 D 1/00<br>F 27 D 19/00<br>F 27 D 21/00 |
| D,X | EP-A-0 039 212 (QUIGLEY CY. INC.)<br>* Figures 1,3,5; page 4, line 11 - page 7, line 30; page 8, line 14 - page 10, line 5 * | 1,7,11<br>-13,15 | |
| | ----- | | |

The present search report has been drawn up for all claims

| Place of search<br>THE HAGUE | Date of completion of the search<br>07-12-1983 | Examiner<br>VISSER F.P.C. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82